# EUROPÄISCHE PATENTSCHRIFT

(11) **EP 0 612 963 B1**
(45) Veröffentlichungstag und Bekanntmachung des Hinweises auf die Patenterteilung: **15.10.1997**
(21) Anmeldenummer: 94102380.6
(22) Anmeldetag: 17.02.1994
(51) Int. Cl.: F24D 3/10, F24H 9/12

(54) **Verteileraggregat für mit einem strömungsfähigen Wärmeträgermedium arbeitende Heiz- oder Kühlanlagen**
Distributor unit for heating and/or cooling systems operated by a heat carrier capable of flowing
Groupe distributeur pour des installations de chauffage et/ou réfrigération fonctionnant par un agent caloporteur étant capable de circuler

(30) Priorität: 25.02.1993 DE 4305694
(43) Veröffentlichungstag der Anmeldung: 31.08.1994
(73) Patentinhaber: Dumser Metallbau GmbH & Co. KG, 76829 Landau (DE)
(72) Erfinder: Dumser, Josef, D-76829 Landau/Pfalz (DE)
(74) Vertreter: Patentanwälte Möll und Bitterich

(56) Entgegenhaltungen:
- DE-A- 1 679 374
- DE-A- 3 038 460
- DE-U- 8 803 804

## Beschreibung

Die Erfindung betrifft ein Verteileraggregat für mit einem strömungsfähigen Wärmeträgermedium arbeitende Heiz- oder Kühlanlagen gemäß dem Oberbegriff des Patentanspruchs 1 (siehe z.B. die DE-A-3 038 460).

Bei der Installation von Heizungsanlagen sind, insbesondere wenn die Heizungsanlage mehrere Strömungskreise umfaßt, wie z.B. eine Warmwasserheizungsanlage, eine Fußbodenheizungsanlage sowie eine Brauchwasserbereitungsanlage, gegebenenfalls sogar noch eine Solaranlage, für jeden Strömungskreis die zur Förderung des Wärmeträgermedius sowie zur Regelung und Überwachung erforderlichen Aggregate vorzusehen.

Um die bislang übliche, sehr arbeitsintensive periphere Installation dieser Aggregate und der dazugehörigen Rohrleitungen im Anschluß an einen Heizkessel zu erleichtern, ist es bereits bekannt geworden, die für jeweils einen Strömungskreis erforderlichen Aggregate, wie Umwälzpumpe, Regler, Mischer, Sicherheits- und Absperrorgane sowie Anzeige- und Bedienungselemente in einer werkseitig vormontierten Installationseinheit als Baugruppe zusammenzufassen, die dann jeweils an die zum Heizkessel führenden Vor- und Rücklaufleitungen anzuschließen sind.

Dies geschieht durch Verteileraggregate, sogenannte Heizkreisverteiler, an denen Anschlußstutzen für die ankommenden und abgehenden Strömungskreise und die zur Regelung dieser Strömungskreise erforderlichen Ventile vorgesehen sind. Diese Heizkreisverteiler sind als sogenannte Querverteiler meist horizontal unterhalb der Baugruppen angeordnet. Zur Verteilung des Wärmeträgermediums auf die nebeneinander liegenden Strömungskreise sind im einfachsten Fall sowohl in der Vorlaufleitung, als auch in der Rücklaufleitung des Heizkessels durch Einbau entsprechender Rohrstücke Vor- bzw. Rücklaufkammern gebildet. Um die Installation zu erleichtern, ist es auch bekannt, solche Heizkreisverteiler zweikammerig auszubilden, wobei Vor- und Rücklaufkammer mit den entsprechenden Anschlüssen in einem einheitlichen Bauteil vorgesehen sind.

Üblicherweise haben die Baugruppen für die einzelnen Strömungskreise, schon durch das Nebeneinander von Vor- und Rücklaufleitung bedingt, eine Verlaufsebene, von deren einer Seite aus die Anzeigeinstrumente abzulesen sowie Ventile, Schieber oder dergleichen zu bedienen sind. Umfaßt eine Heizungsanlage mehrere solcher Strömungskreise, dann werden diese Baugruppen schon aus Gründen der Übersichtlichkeit nebeneinander so angeordnet, daß ihre Verlaufsebenen jeweils in einer Ebene liegen, meist parallel zu einer Gebäudewand, an der die Installation auch befestigt wird. Es ist aber auch bekannt, solche Baugruppen unmittelbar am Heizkessel anzubringen.

Im Zuge der weitgehenden Vorfertigung von Installationseinheiten zur Verringerung der vor Ort beim Einbau anfallenden Arbeiten, ist es üblich, in diesen Baugruppen die Vorlaufleitung mit der Umwälzpumpe immer auf derselben Seite, vorzugsweise rechts, und die Rücklaufleitung auf der anderen Seite, also links, anzuordnen.

Vor allem bei der Altbausanierung, wo in Kellerräumen oft nicht genügend Raum zur Verfügung steht, müssen diese Baugruppen unmittelbar am Heizkessel angeordnet werden. Dies muß, wenn infolge beschränkter Höhe hinter dem Heizkessel, wo Vor- und Rücklaufleitungen beginnen, die Raumhöhe nicht ausreicht, seitlich vom Heizkessel erfolgen, und zwar je nach Situation, rechts oder links davon. Die herkömmlichen Querverteiler sind hierfür nicht geeignet, da sie sich nicht ohne weiteres von einer auf die andere Seite umsetzen lassen, vor allem dann nicht, wenn berücksichtigt werden muß, daß in den anzuschließenden Baugruppen die Pumpe grundsätzlich auf einer Seite angeordnet sein soll. Bei rechts-links-Vertauschung wäre es zwar möglich, die Pumpe in der jeweiligen Baugruppe zu drehen und auch die anderen Armaturen entsprechend einzurichten; dies würde dann aber dazu führen, daß vor Ort wieder genau die Arbeiten verrichtet werden müssen, die durch die Vorfertigung der Baugruppen gerade eingespart werden sollen.

Vor diesem Hintergrund liegt der Erfindung die Aufgabe zugrunde, eine Ausbildung für einen solchen Heizkreisverteiler zu schaffen, der sowohl bei Montage der Baugruppen für die Strömungskreise links oder rechts vom Heizkessel eingesetzt werden kann und an den jedenfalls ohne größere Schwierigkeiten auch mehrere Strömungskreise angeschlossen werden können.

Gemäß der Erfindung wird diese Aufgabe durch ein Verteileraggregat der eingangs angegebenen Art mit den im kennzeichnenden Teil des Patentanspruchs 1 angegebenen Merkmalen gelöst.

Vorteilhafte Weiterbildungen ergeben sich aus den Unteransprüchen.

Der Grundgedanke der Erfindung liegt darin, von der üblichen Ausbildung solcher Heizkreisverteiler als Querverteiler abgehend, einen Heizkreisverteiler vorzusehen, der mit seiner Längsachse zum vertikalen Einbau bestimmt ist. Wenn an diesem Heizkreisverteiler sowohl radial, als auch axial an den Stirnseiten abgehende Anschlüsse an die Strömungskreise vorgesehen sind, dann läßt sich dieser zum Einbau auf unterschiedlichen Seiten eines Heizkessels nicht nur um seine Längsachse verschwenken, sondern auch um 180 Grad um seine Querachse schwenken und so verwenden, daß die innere und die äußere Verteilerkammer sowohl als Vor-, als auch als Rücklaufkammer verwendet werden können. Der erfindungsgemäße Heizkreisverteiler ermöglicht so auf engstem Raum unterschiedlichste Anwendungsmöglichkeiten unter Einhaltung der Bedingung, daß in den strömungsseitig anzuschließenden Baugruppen auch bei rechts-links-Vertauschung die mit der Umwälzpumpe ausgerüstete Vorlaufleitung jeweils auf derselben Seite liegen kann.

Die Erfindung wird nachstehend anhand eines in der Zeichnung dargestellten Ausführungsbeispiels näher erläutert. Es zeigt
- Fig. 1: einen Längsschnitt durch einen Heizkreisverteiler gemäß der Erfindung,
- Fig. 2: einen Querschnitt entlang der Linie II-II in Fig. 1,
- Fig. 3: einen Querschnitt entlang der Linie III-III in Fig. 1 und
- Fig. 4: einen Querschnitt entlang der Linie IV-IV in Fig. 1, die
- Fig. 5 bis 7: schematisch die Darstellung eines Anbaus des erfindungsgemäßen Heizkreisverteilers rechts am Heizkessel mit zwei angeschlossenen Baugruppen, die
- Fig. 8 bis 10: einen Anbau des erfindungsgemäßen Heizkreisverteilers rechts am Kessel mit drei angeschlossenen Baugruppen und die
- Fig. 11 bis 13: einen Anbau des erfindungsgemäßen Heizkreisverteilers links am Kessel mit zwei angeschlossenen Baugruppen.

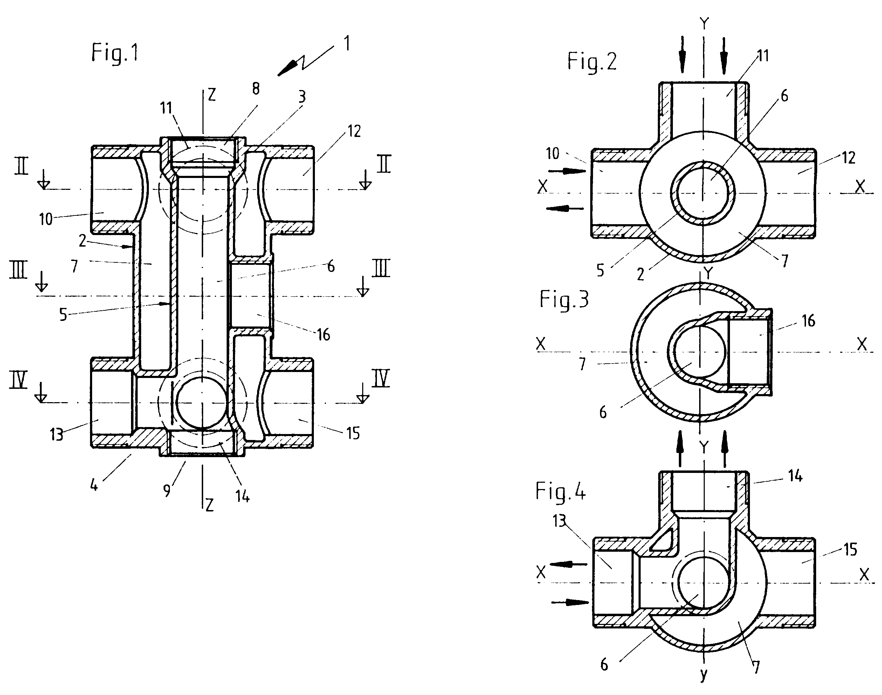

Der in den Fig. 1 bis 4 in Längsschnitt und in Querschnitten dargestellte Heizkreisverteiler 1 besteht aus einem - äußeren - Gehäuse 2 mit kreisförmigem Querschnitt, das an den Stirnseiten 3 und 4 geschlossen ausgebildet und - bezogen auf seine Längsachse Z-Z - koaxial und konzentrisch von einem - inneren - Rohr 5 durchsetzt ist. Das Innenrohr 5 bildet eine innere Verteilerkammer 6; der Ringraum zwischen dem Innenrohr 5 und der Wandung des äußeren Gehäuses 2 bildet eine äußere Verteilerkammer 7.

Sowohl zur inneren Verteilerkammer 6, als auch zur äußeren Verteilerkammer 7 führen unterschiedliche Anschlüsse. Wie vor allem Fig. 1 zeigt, sind zunächst an die innere Verteilerkammer 6 im Bereich der Stirnseiten 3 und 4 axial verlaufende Anschlüsse 8 und 9 mit Innengewinde vorgesehen. Weitere, radial verlaufende Anschlüsse befinden sich in den rechtwinklig zur Längsachse Z-Z verlaufenden Schnittebene II-II, III-III und IV-IV; die dort angeordneten Anschlüsse sind in den Fig. 2 bis 4 dargestellt.

In der, in der Darstellung der Fig. 1, oberen Schnittebene II-II sind insgesamt drei - mit Außengewinde versehene - Anschlüsse 10, 11 und 12 an die äußere Verteilerkammer 7 vorgesehen. Dabei sind, wie weiter unten noch darzulegen sein wird, die Anschlüsse 10 und 11 in der X-X-Achse bzw. in der Y-Y-Achse um 90 Grad gegeneinander verschwenkt für den Anschluß der äußeren Verteilerkammer 7 an den Heizkessel bestimmt; Pfeile sollen den Verlauf von Vor- und Rücklauf in den unterschiedlichen Einbausituationen symbolisieren. Auch der Anschluß 12 führt in der Ebene X-X in die äußere Verteilerkammer 7.

Den Anschluß der inneren Verteilerkammer 6 an den Heizkessel in der, in der Darstellung der Fig. 1, unteren Ebene IV-IV zeigt Fig. 4. Die beiden in entsprechender Weise in der X-X- bzw. Y-Y-Achse liegenden Anschlüsse sind dort mit 13 und 14 bezeichnet. Dem Anschluß 13 in der X-X-Achse gegenüber liegt ein Anschluß 15 an die äußere Verteilerkammer 7. Auch diese Anschlüsse weisen Außengewinde auf.

In der zwischen den Ebenen II-II und IV-IV liegenden Ebene III-III ist noch ein Anschluß 16 in der Ebene X-X an die innere Verteilerkammer 6 vorgesehen (Fig. 3), der, um eine möglichst geringe Bauhöhe des Verteilers 1 zu ermöglichen, Innengewinde besitzt.

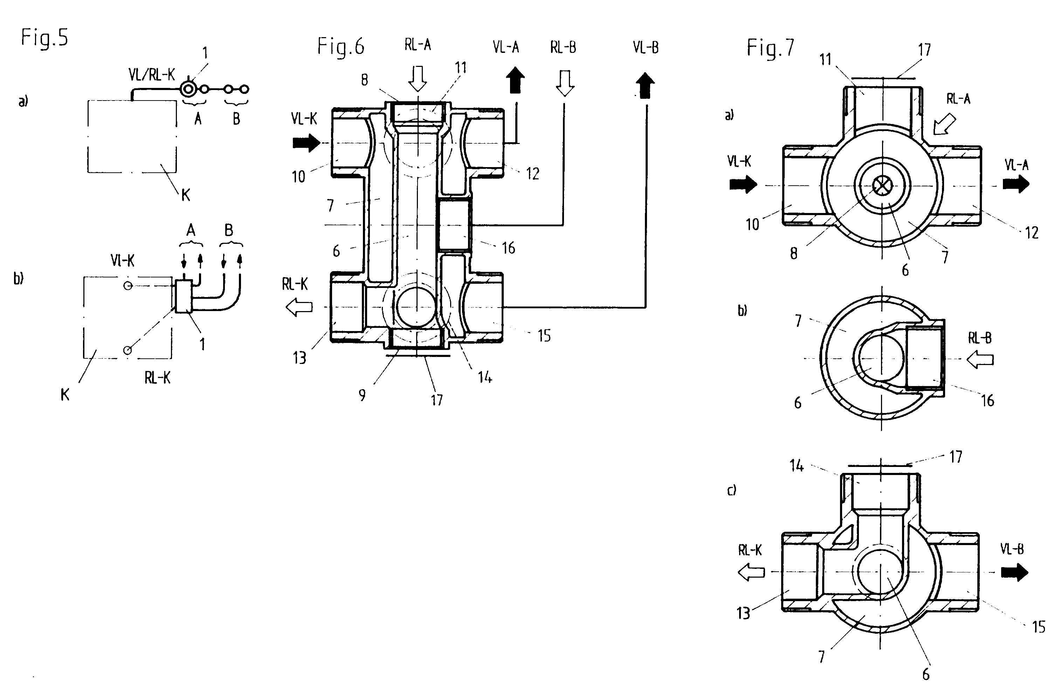

Wie diese Anschlüsse zu nutzen sind, ist anhand einiger Beispiele in den Fig. 5 bis 7, 8 bis 10 sowie 11 bis 13 dargestellt.

Im Beispiel der Fig. 5 bis 7 ist in Fig. 5a schematisch im Grundriß und in Fig. 5b im Aufriß die Situation dargestellt, daß an einen Heizkessel K über Kesselvorlauf VL-K und Kesselrücklauf RL-K ein Heizkreisverteiler 1 gemäß der Erfindung angeschlossen ist, der zu jeweils zwei Strömungskreisen A und B führt, bei denen Vorlauf (rechts) und Rücklauf (links) jeweils durch Pfeile gekennzeichnet sind.

Die Fig. 6 und 7 zeigen die Nutzung der Verteilerkammern und der Anschlüsse. Der Kesselvorlauf VL-K führt über den Anschluß 10 in die äußere Verteilerkammer 7. Von dieser zweigt über den Anschluß 12 der Vorlauf VL-A zum ersten Strömungskreis A ab; der Rücklauf RL-A mündet über den oberen stirnseitigen Anschluß 8 in die innere Verteilerkammer 6. Der Vorlauf VL-B für den zweiten Strömungskreis B zweigt aus der äußeren Verteilerkammer 7 über den Anschluß 15 ab; sein Rücklauf RL-B führt über den Anschluß 16 wiederum zur inneren Verteilerkammer 6, aus der über den Anschluß 13 der Rücklauf RL-K zum Kessel erfolgt. Die Anschlüsse 9, 11 und 14 werden nicht benötigt; sie können durch Deckel 17 verschlossen sein.

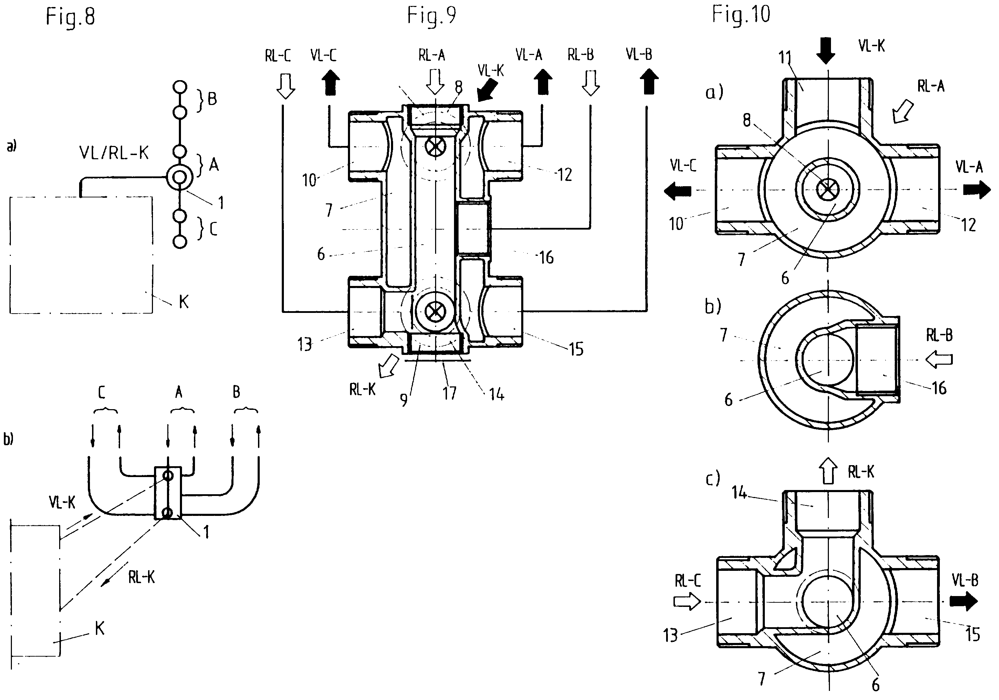

Die Fig. 8 bis 10 zeigen in entsprechender Weise ebenfalls rechts am Heizkessel K angebaut einen erfindungsgemäßen Heizkreisverteiler 1, bei dem alle Anschlußmöglichkeiten für drei Strömungskreise A, B und C genutzt sind, die seitlich parallel zum Heizkessel K angeordnet sind. Dabei befinden sich die Baugruppen für die Strömungskreise A und B hinter dem Heizkreisverteiler 1 und die Baugruppe für den Strömungskreis C vor dem Heizkreisverteiler 1.

Der vom Kessel K kommende Vorlauf VL-K führt über den Anschluß 11 an die äußere Vorlaufkammer 7, von der über den Anschluß 12 der Vorlauf VL-A zum ersten Strömungskreis A und über den Anschluß 10 der Vorlauf VL-C zum dritten Strömungskreis C abzweigen. Der Rücklauf RL-A für den Strömungskreis A mündet über den axialen Anschluß 8 und der Rücklauf RL-C über den Anschlluß 13 in die Innenkammer 6. Vor- und Rücklauf VL-B und RL-B für den zweiten Strömungskreis B gehen aus bzw. münden vom Anschluß 15 bzw. in den Anschluß 16. Der Rücklauf RL-K zum Heizkessel K geht vom Anschluß 14 aus. Lediglich der Anschluß 9 ist unbesetzt; er kann durch einen Deckel 17 verschlossen oder für den Anschluß von Sicherheitseinrichtungen, wie z.B. Druckausdehnungsgefäß, Sicherheitsventil oder dergleichen verwendet werden.

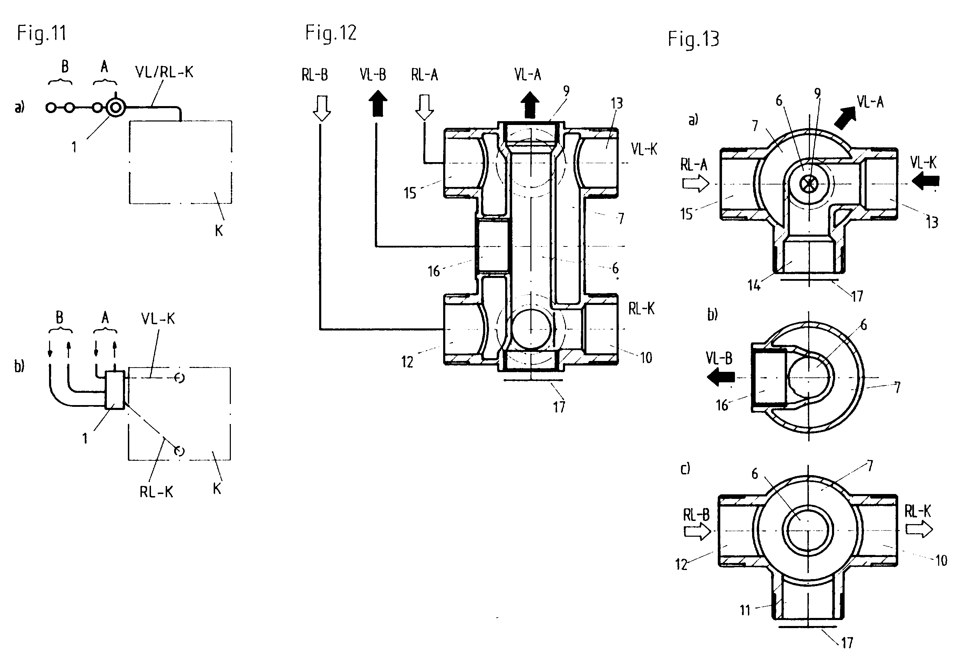

Die Darstellungen der Fig. 11 bis 13 schließlich zeigen den Anbau eines erfindungsgemäßen Heizkreisverteilers 1 links am Heizkessel K mit zwei seitlich abzweigenden Baugruppen für Strömungskreise A und B, umgekehrt wie in den Fig. 5 bis 7. Der Heizkreisverteiler 1 ist hier, wie die Fig. 12 deutlich erkennen läßt, um 180 Grad verschwenkt. Der vom Heizkessel K kommende Vorlauf VL-K mündet hier bei dem Anschluß 13 in die innere Verteilerkammer 6, die hier als Vorlaufkammer dient. Von dieser zweigt über den Anschluß 9 an der Stirnseite der Vorlauf VL-A zum ersten Strömungskreis A ab, während der zugehörige Rücklauf RL-A über den Anschluß 15 in die äußere Verteilerkammer 7 mündet, die hier als Rücklaufkammer dient. Der Vorlauf VL-B für den zweiten Strömungskreis B geht vom - mittleren - Anschluß 16 aus; sein zugehöriger Rücklauf RL-B mündet über den Anschluß 12 wiederum in die äußere Verteilerkammer 7, von der aus über den Anschluß 10 der Rücklauf RL-K zum Kessel erfolgt.

## Patentansprüche

1. Verteileraggregat (1) für mit einem strömungsfähigen Wärmeträgermedium arbeitende Heiz- oder Kühlanlagen mit Anschlüssen für eine Mehrzahl von Strömungskreisen, wobei die zur Förderung des Mediums sowie die zur Regelung und überwachung erforderlichen Armaturen und Verbindungsteile an parallel zueinander verlaufenden Rohrsträngen für Vor- und Rücklauf jeweils eines Strömungskreises zu einer Baugruppe zusammengefaßt sind,
bestehend aus einem rohrförmigen Gehäuse (2), in dem koaxial und konzentrisch zur Gehäusewandung ein inneres Rohr (5) mit geringerem Querschnitt angeordnet ist,
wobei das innere Rohr (5) eine innere Verteilerkammer (6) und der Ringraum zwischen diesem und der Wandung des Gehäuses (2) eine äußere Verteilerkammer (7) bilden,
dadurch gekennzeichnet, daß an dem zum vertikalen Einbau bestimmten Gehäuse (2) in zwei rechtwinklig zur Längsachse (Z-Z) des Gehäuses (2) und im Abstand voneinander verlaufenden Ebenen (II-II und IV-IV) jeweils mindestens zwei radial gerichtete Anschlüsse (10, 11, 13, 14) vorgesehen sind, wovon jeweils zwei Anschlüsse (10, 11 bzw. 13, 14) einen Winkel von 90 Grad miteinander einschließen und bezüglich der Längsachse (Z-Z) des Gehäuses (2) richtungsgleich angeordnet sind,
wobei ferner die Anschlüsse (10, 11) der ersten Ebene (II-II) mit der äußeren Verteilerkammer (7) und die Anschlüsse (13, 14) der zweiten Ebene mit der inneren Verteilerkammer (6) verbunden sind und
wobei schließlich an den Stirnseiten (3, 4) des Gehäuses (2) jeweils axial gerichtete Anschlüsse (8, 9) an die innere Verteilerkammer (6) angeordnet sind.

2. Verteileraggregat nach Anspruch 1, dadurch gekennzeichnet, daß in den beiden Ebenen (II-II bzw. IV-IV) jeweils ein weiterer radial verlaufender Anschluß (12, 15) an die äußere Verteilerkammer (7) vorgesehen ist.

3. Verteileraggregat nach Anspruch 2, dadurch gekennzeichnet, daß die weiteren radial verlaufenden Anschlüsse (12, 15) bezüglich der Längsachse (Z-Z) des Gehäuses (2) richtungsgleich angeordnet sind.

4. Verteileraggregat nach einem der Ansprüche 1 bis 3, dadurch gekennzeichnet, daß in mindestens einer weiteren rechtwinklig zur Längsachse verlaufenden Ebene (III-III) mindestens ein weiterer Anschluß (16) an die innere (6) und/oder die äußere (7) Verteilerkammer vorgesehen ist.

5. Verteileraggregat nach Anspruch 4, dadurch gekennzeichnet, daß die weitere Ebene (III-III) mit ihrem Anschluß (16) zwischen der ersten und der zweiten Ebene (II-II und IV-IV) liegt.

6. Verteileraggregat nach einem der Ansprüche 1 bis 5, dadurch gekennzeichnet, daß sowohl das innere Rohr (5), als auch das Gehäuse (2) kreisförmigen Querschnitt aufweisen.

## Claims

1. A manifold unit (1) for heating and cooling installations operating with a fluid heat transfer medium, having connections for a plurality of circuits, wherein the fittings and connecting parts required for feeding the medium and for controlling and monitoring are combined in pipe runs extending parallel to one another for the forward flow and return flow of a respective circuit to form an assembly, comprising a tubular housing (2), in which an inner tube (5) of smaller cross-section is arranged coaxially and concentrically to the housing wall, wherein the inner tube (5) forms an inner manifold chamber (6) and the annular chamber between the latter and the wall of the housing (2) forms an outer manifold chamber (7),
characterised in that the housing (2) intended for vertical installation is provided in two planes (II-II and IV-IV), extending at right angles to the longitudinal axis (Z-Z) of the housing (2) and at a distance apart, with respectively at least two radially directed connections (10,11,13,14), of which respectively two connections (10,11 and 13,14) form an angle of 90° with one another and are disposed in the same direction with respect to the longitudinal axis (Z-Z) of the housing (2), wherein the connections (10,11) of the first plane (II-II) are connected with the outer manifold chamber (7) and the connections (13,14) of the second plane are connected with the inner manifold chamber (6), and finally wherein at the end faces (3,4) of the housing (2) there are disposed respective axially directed connections (8,9) to the inner manifold chamber (6).

2. A manifold unit according to Claim 1, characterised in that in the two planes (II-II and IV-IV) respectively there is provided a further radially extending connection (12,15) to the outer manifold chamber (7).

3. A manifold unit according to Claim 2, characterised in that the further radially extending connections (12,15) are disposed in the same direction with respect to the longitudinal axis (Z-Z) of the housing (2).

4. A manifold unit according to any one of Claims 1 to 3, characterised in that in at least one further plane (III-III) extending at right angles to the longitudinal axis there is provided at least one further connection (16) to the inner manifold chamber (6) and/or to the outer manifold chamber (7).

5. A manifold unit according to Claim 4, characterised in that the further plane (III-III) is situated with its connection (16) between the first and second planes (II-II and IV-IV).

6. A manifold unit according to any one of Claims 1 to 5, characterised in that both the inner tube (5) and the housing (2) are of circular cross-section.

## Revendications

1. Groupe distributeur (1) pour des installations de chauffage ou de réfrigération fonctionnant avec un agent caloporteur apte à l'écoulement, équipé de branchements pour un grand nombre de circuits d'écoulement, les organes de robinetterie nécessaires pour le transport de l'agent et ceux nécessaires pour le réglage et le contrôle et les pièces de liaison sur des lignes de tubes parallèles entre elles pour l'aller et le retour respectivement d'un circuit d'écoulement étant regroupés en un ensemble, comprenant un carter (2) de forme tubulaire, dans lequel un tube (5) intérieur avec une section assez réduite est disposé de façon coaxiale et concentrique par rapport à la paroi du carter, le tube intérieur (5) formant une chambre de distribution (6) intérieure et l'espace annulaire entre ce tube et la paroi du carter (2) formant une chambre de distribution (7) extérieure, caractérisé en ce que, sur le carter (2) destiné au montage vertical et dans deux plans (II-II et IV-IV) perpendiculaires à l'axe longitudinal (Z-Z) du carter (2) et espacés l'un de l'autre, il est prévu respectivement au moins deux branchements (10, 11, 13, 14) orientés radialement, dont respectivement deux branchements (10, 11 et 13, 14) forment un angle de 90 degrés entre eux et sont disposés dans la même direction par rapport à l'axe longitudinal (Z-Z) du carter (2), les branchements (10, 11) du premier plan (II-II) étant reliés à la chambre de distribution (7) extérieure et les branchements (13, 14) du deuxième plan étant reliés à la chambre de distribution (6) intérieure, et enfin, sur les faces frontales (3, 4) du carter (2), respectivement des branchements (8, 9) orientés sur un plan axial étant disposés sur la chambre de distribution (6) intérieure.

2. Groupe distributeur selon la revendication 1, caractérisé en ce que, dans les deux plans (II-II et IV-IV), respectivement un autre branchement (12, 15) allant dans le sens radial est prévu sur la chambre de distribution (7) extérieure.

3. Groupe distributeur selon la revendication 2, caractérisé en ce que les autres branchements (12, 15) allant dans le sens radial sont disposés dans le même sens par rapport à l'axe longitudinal (Z-Z) du carter.

4. Groupe distributeur selon l'une quelconque des revendications 1 à 3, caractérisé en ce qu'au moins un autre branchement (16) sur la chambre de distribution intérieure (6) et/ou la chambre de distribution extérieure (7) est prévu dans au moins un autre plan (III-III) perpendiculaire à l'axe longitudinal.

5. Groupe distributeur selon la revendication 4, caractérisé en ce que l'autre plan (III-III) avec son branchement (16) se situe entre le premier plan et le deuxième plan (II-II et IV-IV).

6. Groupe distributeur selon l'une quelconque des revendications 1 à 5, caractérisé en ce que aussi bien le tube (5) intérieur que le carter (2) ont une section de forme circulaire.
